Europäisches Patentamt

European Patent Office

Office européen des brevets

(11) Publication number: **0 167 041**
**B1**

(12) # EUROPEAN PATENT SPECIFICATION

(45) Date of publication of patent specification: **07.09.88**

(51) Int. Cl.⁴: **B 64 D 1/22,** B 64 C 27/00, H 02 G 1/04

(21) Application number: **85107361.9**

(22) Date of filing: **10.12.80**

(60) Publication number of the earlier application in accordance with Art. 76 EPC: **0 041 997**

(54) **Load pick-up coupling device.**

(30) Priority: **13.12.79 US 103348**
**30.05.80 US 154878**

(43) Date of publication of application:
**08.01.86 Bulletin 86/02**

(45) Publication of the grant of the patent:
**07.09.88 Bulletin 88/36**

(84) Designated Contracting States:
**AT CH FR GB LI NL SE**

(56) References cited:
**US-A-3 601 342**
**US-A-3 845 937**
**US-A-4 006 884**
**US-A-4 124 181**
**US-A-4 170 341**

(73) Proprietor: **CHAPMAN, Claude Louis**
**3300 West Union**
**Englewood, CO 80110 (US)**

(72) Inventor: **CHAPMAN, Claude Louis**
**3300 West Union**
**Englewood, CO 80110 (US)**

(74) Representative: **Butler, Michael John et al**
**FRANK B. DEHN & CO. Imperial House 15-19**
**Kingsway**
**London, WC2B 6UZ (GB)**

**Description**

This invention relates to a load pick-up coupling device.

In the past a common practice in airlifting loads has been to use a grappling hook or some other type of hook on the end of a hoist line to hook into the load or a cable attached to the load. In most cases ground personnel is used to make certain there is a reliable connection between the hoist line and the load. US—A—4,124,181 describes one such arrangement.

In many aerial load pickup situations it is also highly desirable to be able to readily release the load from the hoist line without ground personnel. From US—A—3,845,973 is known a load pick-up device having the features of the first part of claim 1, but which is not suitable for repeated coupling operations at different locations.

Viewed from one aspect the invention provides a load pickup coupling device for enabling a hoist line having an end member to be connected to a load, such device comprising a pivot member connected to the load and arranged to pivot about a substantially horizontal axis between a first position wherein it extends along a horizontal plane or is inclined upwardly by a relatively small angle with respect to such horizontal plane, and a second position wherein it extends generally vertically, such pivot member having at the end thereof remote from the pivot axis a generally "U"-shaped retainer portion defining a receiving area for the hoist line whose cross-section is larger than the cross-section of the hoist line and smaller than that of the end member, there being an outwardly flared guide portion leading to said retainer portion and arranged to assist in guiding the hoist line and end member to the retainer portion by manipulation from the air with said pivot member in its first position, whereby the line and end member are coupled to the retainer portion upon pivotal movement of the pivot member to its second position by upward force applied to the hoist line, characterised in that said guide portion is integral with and forms an extension of said retainer portion so that the guide portion is carried with the retainer portion when suspended from the hoist line, there being support means cooperating with the pivot member in such a way that in said first position the guide portion is supported with sufficient clearance thereunder for said end member to be moved there below, and in that said guide portion leads to said "U"-shaped retainer portion in a direction away from said pivot axis of said pivot member.

Viewed from a further aspect the invention provides a method of repeatedly coupling an aircraft to a load by manipulation of a hoist line from the air characterised by using a load pick-up device as described above, the method including flying the aircraft to the location of the load, moving an end member of the hoist line below the guide portion of the pivot member with said member in its first position so that the hoist line enters the guide portion, moving the hoist line along the guide portion in a direction away from the pivot member pivot axis so that it enters said retainer portion, applying an upward force on said line so that said pivot member is pivoted to its second position whereby a releasable connection is formed between the guide portion and said hoist line and end member, lifting said load and moving it to a desired location, lowering the load and relaxing the tension on the hoist line so that the pivot member returns to its first position, and disengaging the hoist line and end member from the pivot member, whereby the pivot member is left in its first position for subsequent coupling operations without the need for manual intervention from the ground if desired.

The pivot member may be in the form of a hook-like structure or a bail-like structure, for example, defining a central receiving area disposed in a substantially horizontal plane.

The load pick-up device is applicable, for example, to a method and apparatus for stringing a line by means of an aircraft as described in EP—A—0041997 from which this application is divided.

Certain embodiments of the invention will now be described, by way of example only, with reference to the accompanying drawings in which:—

Fig. 1 is a top plan view of a coupling device in accordance with the present invention;

Fig. 2 is a side elevation view of the coupling device shown in Figure 1;

Fig. 3 is an enlarged end elevation view of a portion of the coupling device shown in Figure 1 with the pivot member upright;

Fig. 4 is an enlarged side elevational view of the pivot assembly of Figure 3;

Fig. 5 is a sectional view taken along lines 5—5 of Figure 3;

Fig. 6 is a pictorial view of the deployment of a helicopter with a hoist line having an end member on the lower end for engaging the coupling device shown in Figure 1;

Fig. 7 is a pictorial view of the load being carried by the helicopter via the coupling device;

Fig. 8 is a pictorial view of the load in a ground-supported position with the pivot member moving with the end member extending back toward a horizontal position prior to release of the end member and hoist line from the device;

Fig. 9 is a top plan view of another form of aerial coupling device in accordance with the present invention; and

Fig. 10 is a side elevation view of the device shown in Figure 9.

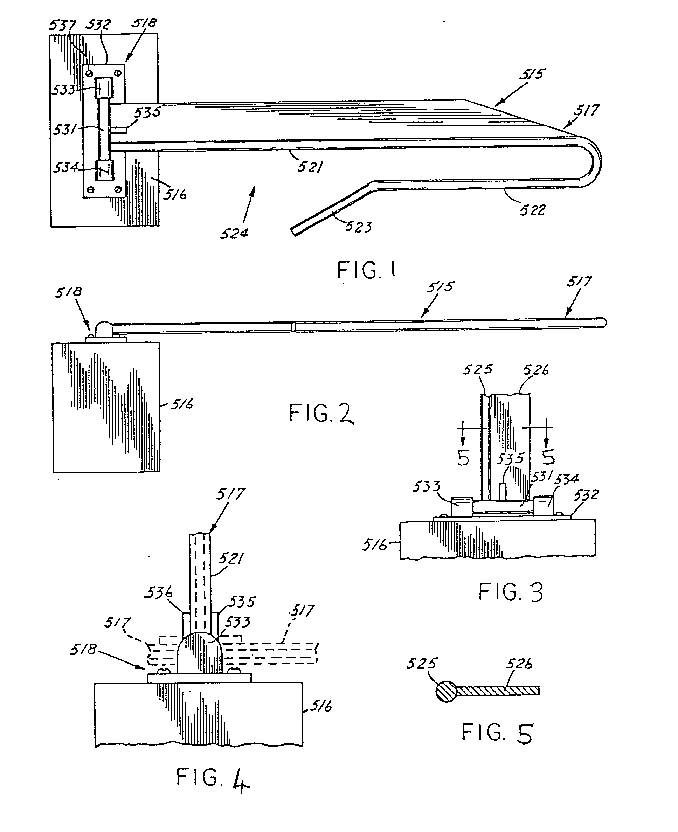

Referring now to Figures 1—10 of the drawings, a load pickup coupling device 515 shown is mounted on load 516 represented in a general form as a rectangular block. This coupling device 515, generally stated, has a single hook-shaped pivot member 517 pivotally connected at one end to the top of the load by a pivot assembly 518 to pivot about a substantially horizontal axis between selected positions described hereinafter.

The pivot member 517 shown is comprised of a shank portion 521 and a U-shaped retainer portion 522 with an outwardly flared end portion 523 opposite assembly 518 which define an interior receiving area with a receiving opening 524 for the line along one side opposite the shank portion and between the end of the end portion 23 and the load. This configuration for the pivot member and the fact that it is disposed substantially on its side in a prone position as shown in Figure 1 provides a load-supported, line-engaging target area for the hoist line.

In practice the hoist line and end member are moved by the aircraft and engage the pivot member so that its external edge assists in guiding the hoist line toward the opening in the hook between the flared end portion and the load. The outwardly flared end portion facilitates guiding of the hoist line into the opening in the hook and against the inner edge of the shank portion, which then serves as a line-engaging target area for the hoist line and guides the hoist line into the retainer portion 522. The retainer portion 522 is larger than the cross section of the hoist line and smaller than the cross section of the end member carried by the hoist line. Once carried by the hoist line, the pivot member 517 and its pivotal connection at the assembly 518 become load-bearing or load-supporting members between the hoist line and load.

The pivot member 517 shown is made of a solid rod 525 of circular cross section with a reinforcing plate 526 that extends along the shank portion and one side of the retainer portion for added strength.

The pivot assembly 518 for the pivot member 517 includes a transverse pivot rod 531 affixed to the end of the shank portion opposite the retainer portion adapted to rotate about a horizontal axis, together with a mounting plate 532 which carries a pair of sleeve bearings 533 and 534 affixed thereto. The pivot rod 531 is telescopically received in and retained at opposite ends by the sleeve bearings 533 and 534.

A horizontal stop 535 is carried by the shank portion and engages the mounting plate 532 to hold the pivot member 517 in the horizontal position on one side, and a horizontal stop 536 is mounted on the opposite side of the pivot member to hold the pivot in a horizontal position when swung to an opposite position as shown in dashed lines. It is understood that the stops 535 and 536 may be shaped to position the pivot member at an upward incline to the horizontal if desired, but in most cases this angle would be small and would not exceed 45°. Screw fasteners 537 are shown holding the mounting plate to the load. While a mounting plate is shown, it is understood that other fastening techniques may be used to fasten the pivot assembly 518 to the load and other forms of pivots may be used to pivotally mount the pivot member 517 to a load.

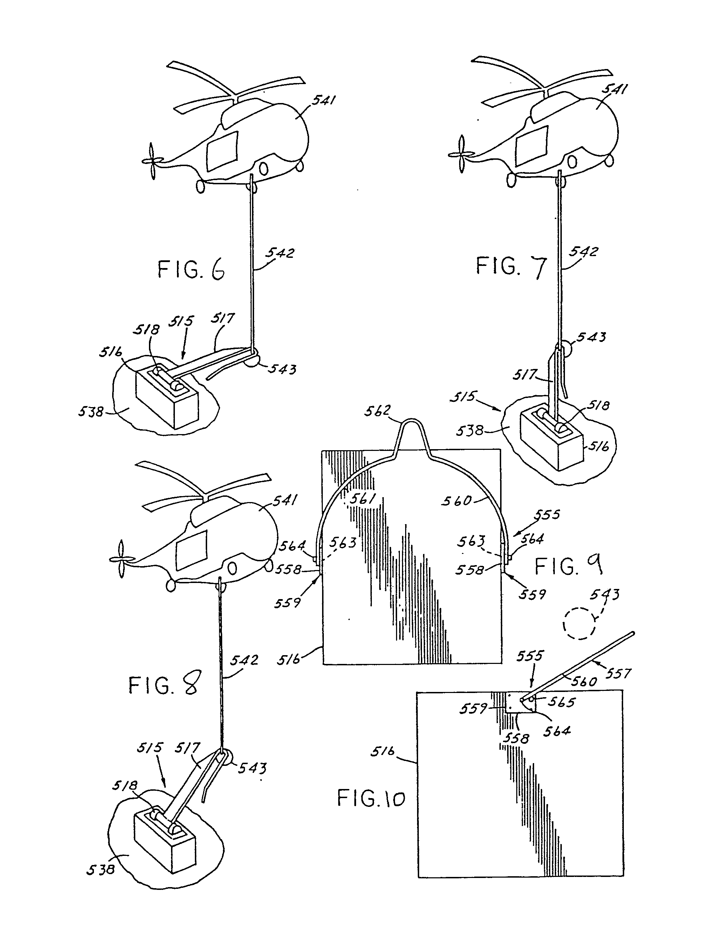

Referring now to Figures 6—8, the load 516 with a coupling device 515 mounted thereon, as above described, is shown on a supporting surface 538.

A helicopter-type aircraft 541 has a hoist line 542 suspended thereon with an end member 543 in the form of a ball forming a weight on the lower end. Shapes other than spherical could be used.

The helicopter positions the end member 543 below the pivot member and the line 542 is moved toward the shank portion 521 through the receiving opening 524, usually against the inner edge of the shank portion wherein it is guided thereby into the retainer portion 522. The end member 543 is then raised against the retainer portion and at the same time the pivot member swings up about the pivot and forms a connection between the load and the helicopter so that the helicopter may elevate the load, as shown in Figure 16.

To release the load from the hoist line, upon the placement of the load on a support surface the pivot member will tend to swing in the direction of the end member 543 and lie back down to the horizontal position, whereupon the end member 543 may be slid from the retainer portion and out the receiving opening of the hook in reversal of motion to that of its application.

In Figures 9 and 10 there is shown another form of coupling device 555 including a pivot member 557 and a pivot assembly 559 connected at each end to the load 516. Pivot member 557 is in the nature of a modified U-shaped bail comprised of a pair of oppositely disposed, spaced, arcuate shank portions 560 and 561, each pivotally connected at one end to the load and connected at the opposite end to a U-shaped retainer portion 562. The shank portions 560 and 561 form a receiving area through which the end member will insert and the inside edges guide the hoist line into the retainer portion. Again the retainer portion 562 is smaller in size than the end member to form the connection.

The pivot assembly 559 at each end is shown to include a mounting plate 558 held to the load as by bolt fasteners with a pivot stud 563 extending through a hole in the end of the shank portion having a retainer head 564. Suitable stops 565 are provided on each shank portion to dispose the pivot member at an angle to the horizontal, preferably of about 30° but usually not more than 45°. The angular position allows the hoist line and end member to be moved into the receiving area toward the retainer portion 562 from the side. This configuration for member 557 provides a generally wider target area for the hoist line and end member.

The operation of the coupling device 555 is similar to that of device 515 above described and the interior receiving area formed by the pivot member must be large enough for the end member on the hoist line to be moved into the receiving area from the side toward the retainer portion 562. The width of the retainer portion 562 allows the line to slide thereinto and engage the end member when it is pulled up against same.

## Claims

1. A load pickup coupling device (515) for enabling a hoist line (542) having an end member (543) to be connected to a load (516), such device comprising a pivot member (517; 557) connected to the load and arranged to pivot about a substantially horizontal axis between a first position wherein it extends along a horizontal plane or is inclined upwardly by a relatively small angle with respect to such horizontal plane, and a second position wherein it extends generally vertically, such pivot member (517; 557) having at the end thereof remote from the pivot axis a generally "U"-shaped retainer portion (522; 562) defining a receiving area for the hoist line whose cross-section is larger than the cross-section of the hoist line (542) and smaller than that of the end member (543), there being an outwardly flared guide portion (521, 523; 560, 561) leading to said retainer portion and arranged to assist in guiding the hoist line (542) and end member (543) to the retained portion (522; 562) by manipulation from the air with said pivot member in its first position, whereby the line and end member are coupled to the retainer portion upon pivotal movement of the pivot member to its second position by upward force applied to the hoist line, characterised in that said guide portion (521; 523; 560; 561) is integral with and forms an extension of said retainer portion (522; 562) so that the guide portion is carried with the retainer portion when suspended from the hoist line, there being support means (535; 565) cooperating with the pivot member in such a way that in said first position the guide portion is supported with sufficient clearance thereunder for said end member to be moved there below, and in that said guide portion (521, 523; 560, 561) leads to said "U"-shaped retainer portion (522; 562) in a direction away from said pivot axis of said pivot member.

2. A device as claimed in claim 1 wherein the pivot member (519) comprises an elongate hook-like member defined by two, spaced arms (521, 522) the first of which (521) is pivotally connected to the load and the second of which includes a free end portion (523) tapered away from the first arm (521) and defining therewith the guide portion, the ends of said arms remote from said pivot axis being joined to define said retainer portion (522).

3. A device as claimed in claim 2 wherein said first arm (521) carries a strengthening plate (526) extending along the side thereof remote from the second arm.

4. A device as claimed in claim 1 wherein the pivot member (517) comprises a pair of arms (560, 561) converging inwardly towards said retainer portion (562) and defining said guide portion, both of said arms being pivotally connected to the load at the ends thereof remote from the retainer portion.

5. A method of repeatedly coupling an aircraft to a load by manipulation of a hoist line from the air characterised by using a load pick-up device as claimed in any preceding claim, the method including flying the aircraft to the location of the load, moving an end member of the hoist line below the guide portion of the pivot member with said member in its first position so that the hoist line enters the guide portion, moving the hoist line along the guide portion in a direction away from the pivot member axis so that it enters said retainer portion, applying an upward force on said line so that said pivot member is pivoted to its second position whereby a releasable connection is formed between the guide portion and said hoist line and end member, lifting said load and moving it to a desired location, lowering the load and relaxing the tension on the hoist line so that the pivot member returns to its first position, and disengaging the hoist line and end member from the pivot member, whereby the pivot member is left in its first position for subsequent coupling operations without the need for manual intervention from the ground if desired.

## Patentansprüche

1. Lastaufnehmende Kupplungseinrichtung (515) zum Verbinden eines mit einem Endglied (543) versehenen Hebestranges (542) mit einer Last (516), mit einem mit der Last verbundenen Schwenkglied (517; 557), das um eine im wesentlichen horizontale Achse zwischen einer ersten Stellung, in der sich das Schwenkglied längs einer horizontalen Ebene erstreckt oder von dieser um einen relativ kleinen Winkel aufwärtsgeneigt ist, und einer zweiten Stellung verschwenkbar ist, in der sich das Schwenkglied im wesentlichen vertikal erstreckt, wobei das Schwenkglied (517; 557) an seinem von der Schwenkachse entfernten Ende einen im wesentlichen U-förmigen Halteteil (522; 562) hat, der für die Aufnahme des Hebestranges einen Aufnahmebereich besitzt, der im Querschnitt größer ist als der Hebestrang (542) und kleiner als das Endglied (543), ferner einen sich auswärts erweiternden Führungsteil (521, 523; 560, 561), der zu dem Halteteil führt und dazu dient, bei in seiner ersten Stellung befindlichem Schwenkglied das Einführen des aus der Luft manipulierten Hebestranges (542) und Endgliedes (543) in den Halteteil (522; 562) zu unterstützen, so daß durch eine auf den Hebestrang ausgeübte Aufwärtskraft das Schwenkglied in seine zweite Stellung verschwenkbar ist, um den Strang und das Endglied mit dem Halteteil zu kuppeln, dadurch gekennzeichnet, daß der Führungsteil (521, 523; 560, 561) mit dem Halteteil (522; 562) einstückig ist und einen Fortsatz desselben bildet, so daß der Führungsteil von dem an dem Hebestrang hängenden Halteteil getragen wird, wenn dieser an dem Hebestrang hängt, daß eine Stützeinrichtung (535; 565) vorgesehen ist, die mit dem Schwenkglied derart zusammenwirkt, daß in dessen erster Stellung der Führungsteil derart abgestützt ist, daß unter ihm ein Freiraum vorhanden ist, der so groß ist, daß das Endglied darunter bewegt werden kann, und daß der Führungsteil (521, 523; 560, 561) in einer von der Schwenkachse des Schwenkgliedes wegführenden Richtung zu dem U-förmigen Halteteil (522; 562) führt.

2. Einrichtung nach Anspruch 1, dadurch gekennzeichnet, daß das Schwenkglied (519) ein langgestrecktes, hakenförmiges Gebilde aufweist, das zwei im Abstand voneinander angeordnete Schenkel (521, 522) besitzt, von denen der erste (521) an der Last angelenkt ist und der zweite einen freien Endteil (523) besitzt, der sich von dem ersten Schenkel (521) weg verjüngt und mit ihm den Führungsteil bildet, und die von der Schwenkachse entfernten Enden der Schenkel unter Bildung des Halteteils (522) miteinander verbunden sind.

3. Einrichtung nach Anspruch 2, dadurch gekennzeichnet, daß der erste Schenkel (521) eine Verstärkungsplatte (526) trägt, die sich längs der von dem zweiten Schenkel entfernten Seite des ersten Schenkels erstreckt.

4. Einrichtung nach Anspruch 1, dadurch gekennzeichnet, daß das Schwenkglied (517) ein Paar von Schenkeln (560, 561) besitzt, die zu dem Halteteil (562) hin einwärts konvergieren und den Führungsteil bilden, und beide Schenkel an ihrem von dem Halteteil entfernten Ende an der Last angelenkt sind.

5. Verfahren zum wiederholten Kuppeln eines Luftfahrzeuges mit einer Last durch Manipulation eines Hebestranges aus der Luft, dadurch gekennzeichnet, daß eine lastaufnehmende Einrichtung nach einem der vorhergehenden Ansprüche verwendet wird, wobei das Luftfahrzeug an den Ort der Last geflogen wird, bei in seiner ersten Stellung befindlichem Schwenkglied ein Endglied des Hebestranges derart unter den Führungsteil des Schwenkgliedes bewegt wird, daß der Hebestrang in den Führungsteil eintritt, worauf der Hebestrang längs des Führungsteiles von der Schwenkachse des Schwenkgliedes weg in den Halteteil bewegt wird, auf den Strang eine Aufwärtskraft ausgeübt und dadurch das Schwenkglied in seine zweite Stellung verschwenkt und zwischen dem Führungsteil und dem Hebestrang und dem Endglied eine lösbare Verbindung hergestellt wird, die Last gehoben und an einen gewünschten Ort bewegt wird, die Last gesenkt und der Hebestrang zugentlastet wird, so daß das Schwenkglied in seine erste Sellung zurückkehrt, und der Hebestrang und das Endglied von dem Schwenkglied abgerückt werden, so daß dieser in seiner ersten Stellung bleibt und gegebenenfalls ohne vom Boden aus erfolgenden manuellen Eingriff für darauffolgende Kupplungsvorgänge verwendet werden kann.

**Revendications**

1. Dispositif (515) d'attelage pour le ramassage de charges destiné à permettre de relier un câble de levage (542) ayant un organe d'extrémité (543) à une charge (516), ce dispositif comprenant un organe pivotant (517, 557) relié à la charge et agencé pour pivoter autour d'un axe à peu près horizontal entre une première position dans laquelle il s'étend dans un plan horizontal, ou est incliné vers le haut d'un angle relativement faible par rapport à ce plan horizontal, et une seconde position dans laquelle il s'étend dans son ensemble verticalement, cet organe pivotant (517, 557) ayant à son extrémité opposée à l'axe de pivotement un organe de retenue (522, 562) ayant dans son ensemble une forme en U délimitant une partie de réception pour le câble de levage, dont la section transversale est plus grande que la section transversale dudit câble (542) et plus petite que celle de l'organe d'extrémité (543), une partie de guidage (521, 523, 560, 561) divergeant vers l'extérieur étant prévue pour conduire vers la partie de retenue et agencée pour contribuer au guidage du câble (542) et de l'organe d'extrémité (543) dans la partie de retenue (522, 562) par une manipulation depuis l'air, l'organe pivotant étant dans sa première position, grâce à quoi le câble et l'organe d'extrémité sont accouplés à la partie de retenue par un mouvement de pivotement de l'organe pivotant vers sa seconde position sous l'effet d'un force dirigée vers le haut appliquée au câble de levage, dispositif caractérisé en ce que la partie de guidage (521, 523, 560, 561) est venue de matière avec la partie de retenue (522, 562) et forme un prolongement de celle-ci, de telle sorte que la partie de guidage est portée avec la partie de retenue lorsqu'elles sont suspendues au câble de levage, des moyens de support (535, 565) coopérant avec l'organe pivotant de telle manière que dans la première position la partie de guidage est supportée avec, au-dessous d'elle, un jeu suffisant pour que l'organe d'extrémité puisse être déplacé au-dessous, et en ce que la partie de guidage (521, 523, 560, 561) conduit à la partie de retenue de forme en U (522, 562) dans une direction s'éloignant de l'axe d'articulation de l'organe pivotant.

2. Dispositif suivant la revendication 1, dans lequel l'organe pivotant (519) est consitué par un organe allongé en forme de crochet délimité par deux bras espacés (521, 522) dont le premier (521) est articulé sur la charge et dont le second comprend une partie d'extrémité libre (523) divergeant en s'éloignant de la première branche (521) et délimitant avec elle la partie de guidage, les extrémités dits bras éloignés de l'axe de pivotement étant réunies pour former la partie de retenue (522).

3. Dispositif suivant la revendication 2, dans lequel le premier bras (521) porte une plaque de renforcement (526) s'étendant le long de son côté éloigné du second bras.

4. Dispositif suivant la revendication 1, dans lequel l'organe pivotant (517) comprend deux bras (560, 561) convergeant vers l'intérieur en direction de la partie de retenue (562) et délimitant cette partie, les deux bras étant articulés à la charge par leurs extrémités opposées à la partie de retenue.

5. Procédé pour atteler de façon répétitive un aéronef à une charge par manipulation d'un câble de levage à partir de l'air, caractérisé en ce qu'on utilise un dispositif de ramassage de charges tel que revendiqué dans l'une quelconque des revendications précédentes, ce procédé comprenant le pilotage de l'aéronef jusqu'à l'emplacement de la charge, le déplacement d'un organe d'extrémité du câble de levage au-dessous de la partie de guidage de l'organe pivotant, cet organe étant dans sa première position, de telle sorte que le câble pénètre dans la partie de guidage, le déplacement du câble de levage le long de la partie de guidage dans une direction qui l'éloigne de l'axe de pivotement de l'organe pivotant de façon qu'il pénètre dans la partie de retenue, l'application au câble d'une force dirigée vers le haut de façon que l'organe pivotant bascule dans sa seconde position, grâce à quoi une liaison séparable est formée entre la partie de guidage, le câble de levage et l'organe d'extrémité, le soulèvement de la charge et son déplacement dans une position désirée, l'abaissement de la charge et le relâchement de la traction sur le câble de façon que l'organe pivotant revienne dans sa première position, et le dégagement du câble de levage et de l'organe d'extrémité de l'organe oscillant, grâce à quoi cet organe est laissé dans sa première position pour des opérations ultérieures d'attelage, sand qu'il soit besoin d'une intervention manuelle au sol, si on le désire.

537 532 518

533

531 535

534 516

515

517

521

524 523 522

FIG. 1

518 515 517

516

FIG. 2

525 526

5 535 5

533 531 534

532

516

FIG. 3

517

521

536 535

517 533

517

518

516

FIG. 4

525 526

FIG. 5

FIG. 6

FIG. 7

FIG. 8

FIG. 9

FIG. 10

2